# EUROPEAN PATENT SPECIFICATION

(11) **EP 0 684 305 B1**
(45) Date of publication and mention of the grant of the patent: **29.08.2001**
(21) Application number: 94201497.8
(22) Date of filing: 26.05.1994
(51) Int. Cl.: C12G 3/02

(54) **Production of cider with a purified pectin methylesterase**
Herstellung von Apfelschaumwein mit einer gereinigten Pektin Methylesterase
Production de cidre avec une pectine méthyl estérase purifiée

(43) Date of publication of application: 29.11.1995
(73) Proprietor: DSM N.V., 6411 TE Heerlen (NL)
(72) Inventor: Grassin, Catherine Marie Therese, F-59113 Seclin (FR); Fauquembergue, Pierre Clement Louis, F-59113 Seclin (FR)

(56) References cited:
- WO-A-93/09683
- DE-A- 3 523 043
- COMPTES RENDUS DES SEANCES DE L'ACADEMIE D'AGRICULTURE DE FRANCE., vol.63, no.18, 1977, FRANCE pages 1196 - 1203 CALVEZ, J; BARON,A; DRILLEAU, J.F. 'Description des principaux facteurs intervenant dans la défécation des mouts de pommes.'

## Description

### Field of the invention

The present invention relates to the cider production process and to the inclusion therein of an enzymatic maceration step.

### Background of the invention

In the traditional cider process, cider clarification occurs spontaneously due to endogenous pectin methylesterase (PME) activity, which is present after pressing in the fresh apple juice. Calcium chloride is added to ensure the formation of insoluble sediments which rise to the top of the tank due to CO₂ bubbles produced during the initial stage of alcoholic fermentation. In the resulting brown coagulum part of the juice colloids, like pectin, cell walls, proteins and polyphenols are entrapped.

This method called "defecation" or keefing is not very well controlled. A lot of factors can influence the clarification process, such as level of endogenous pectin esterase, temperature, a too early onset of fermentation, preventing the formation of the "chapeau brun" (brown coagulum), and a too long process time, inducing unfavourable flavours and unwanted acetic or lactic fermentation depending on the sanitary state of the apples.

European Patent Application EP-A-0547648 discloses the use of a pectin esterase that is substantially free from depolymerase activity for the production of juices and pectin containing pomace from fruits or vegetables. The pectin esterase is added during the maceration step of the fruit or vegetable pulp, before the pressing.

To be able to control the process and to increase the defecation speed, a partially purified pectin methylesterase (PME) from Aspergillus niger called Rapidase® CPE (Gist-brocades) has been developed. It contains 100 PME units per gram for 100 pectinlyase (PL) units with a low endopolygalacturonase (PG) activity.

In the current cider production process, Rapidase® CPE is added after pressing. The enzyme preparation, together with CaCl₂, is mixed with a small amount of must and added to the juice obtained from pressing, during the filling of the defecation tank. The enzyme used amounts 7 to 10 ml per hectoliter apple juice. The addition of calcium ions is necessary for the coagulum formation.

The substrate of Rapidase® CPE is the apple juice's pectin. This pectin is quickly demethylated, the speed of the process depending on temperature. The reaction time of Rapidase® CPE in the juice and the temperature are related as follows: at 3-5°C, 1-2 weeks, at 8-10°C, 3-4 days, at 13-15°C, 12-16 hours. The temperature should not exceed 15°C, because of a stimulating effect of higher temperature on yeast growth, which may prevent coagulum formation and alter the aromatic characteristics of the cider.

The enzyme preparation does not degrade the pectin main chain, but enables the demethylated carboxylic groups to react with calcium ions, producing a very thick coagulum of calcium pectate. This defecation enables a good clarification of apple juices at the beginning of the alcoholic fermentation.

As another important advantage of the use of PME it should be mentioned that the clarified juice is lower in nutrients, because it contains less yeasts and has a lower nitrogen content. As a consequence, the main fermentation is proceeding much more slowly, allowing to get a more aromatic cider (more esters and less higher alcohols).

As a third advantage, the methanol content of the treated juice is lower due to PME action: the acceleration of the process as compared to the spontaneous defecation allows to produce the coagulum more quickly, thus decreasing the contact time between the enzyme and the substrate containing the potential methanol.

### Summary of the invention

The present invention describes the cider production process including an enzymatic maceration step, and the use of a PME preparation which is substantially purified in said maceration step.

The maceration step is characterized in that a purified PME preparation is added to the crushed apples at this stage. Preferably, the PME is substantially free from pectin depolymerase activities, such as polygalacturonase, pectin lyase and the like.

In one embodiment of the invention, anhydrous CaCl₂ is added together with the PME, allowing defecation to occur already during maceration.

In another embodiment, the CaCl₂ is added to the juice after pressing, whereby defecation occurs more quickly as compared to the normal process without the maceration step.

The present invention describes a process for the production of cider comprising the following steps:
- crushing of apples
- addition of enzyme and calcium
- maceration/defecation
- pressing
- centrifugation
- main fermentation

In another embodiment, the present invention describes a process for the production of cider comprising the following steps:
- crushing of apples
- addition of enzyme
- maceration
- pressing
- addition of calcium
- defecation
- main fermentation

Furthermore, the present invention provides a process for the production of cider with a substantially decreased defecation and clarification time.

Preferably, the present invention provides a process for the production of cider wherein the defecation and clarification time is less than 24 hours. More preferably less than 12 hours.

In another aspect, the present invention provides a process for the production of cider wherein the use of a separate defecation tank is circumvented.

The present invention further provides a cider with improved characteristics, for example a lower methanol content.

### Description of the figures

Figure 1. Outline of the cider production process, comprising A; an enzymatic maceration step before pressing using a substantially purified PME preparation in this step and B; the use of Rapidase® CPE in defecation (current cider production process).

Figure 2. Juice yield improvement in the cider production process using either increasing amounts of purified PME (0 to 150,000 units per ton apples) with a constant calcium value of 400 g/ton, or increasing amounts of calcium (0 to 400 g per ton apples) with a constant PME value of 50,000 U/ton.

### Detailed description

In the first stage of the cider production process, before pressing of the apples, an enzymatic maceration step is included. Enzymatic maceration of apple pulp requires an enzyme preparation which lacks substantial amounts of pectin depolymerizing enzyme activities. The present invention is directed to the use of a substantially purified PME preparation, especially a PME preparation with a decreased PG and PL level as compared to Rapidase® CPE, enabling enzymatic maceration without degradation of the pectin main chain.

More specifically, the present invention describes the use of a purified PME preparation, containing less than 1 unit of PG and less than 1 unit of PL, over 100 units of PME.

The PME can originate from any source, such as from microorganisms or plants. The pectin methylesterase suitable for use according to the present invention is stable in apple pulp or juice medium and retains its activity during the juice processing (pH 2.5-6.0, organic acids, tannins). Due to the desired enzyme characteristics, the PME preferably originates from a fungus. More preferably it originates from Aspergillus, especially from Aspergillus niger.

The crude pectin esterase obtained from a culture medium can be purified in a number of ways. Preferably, the purification results in a product that is substantially free from polygalacturonase (PG) and pectin lyase (PL) activities. The crude enzyme may be purified for example by liquid chromatography (ion exchange, gel filtration, affinity) (Ishii et al., 1980, Deutsches Patentamt Auslegeschrift 2843351/C07G7/028) or by selective inhibition of the pectin depolymerases (pH shock, heat shock, chemical inhibitors, chemical or organic solvents extraction) (Smythe C. et al., 1952, United States Patent US 2,599,531). Another source for obtaining purified pectin esterase as defined for the present application is pectin esterase obtained by recombinant DNA technology. An example is the expression cloning of the Aspergillus niger pectin esterase for which the cDNA sequence has been determined (Khanh et al., 1990, Nucl. Acids Res. 18, 4262). As expression host Aspergillus niger could be used. However, in view of the possible contamination of the pectin esterase with polygalacturonase, pectin lyase and other pectin depolymerases it may be preferable to use a heterologous host organism for producing the pectin esterase. Suitable host organisms include bacteria and fungi. Preferred species would be Bacilli, Escherichia, Saccharomyces, Kluyveromyces and Aspergilli.

Enzymatic maceration of apple pulp before pressing, performed with a substantially purified PME, has several advantages. The substantially purified PME enables the use of higher PME doses as compared to Rapidase® CPE, resulting in a considerable decrease of the defecation and clarification time (see Example 1). The defecation time, which originally varied from several days to weeks, the latter for a process without added enzyme, is now reduced to a period of half an hour to several hours.

Added to the apple pulp (apple varieties for table or for cider), the substantially purified PME can be used between 50 and 500 g per ton apples (20.000 to 225.000 units per ton).

If CaCl₂ is added simultaneously with the PME, defecation already occurs during maceration, by calcium precipitation of the soluble pectin into the pomace after demethylation by PME. CaCl₂ is added at about 50-200 g per ton apples and the treatment can be performed at a temperature of 8-25°C. The upper temperature limit is higher than is allowed for the separate defecation stage. The maceration/defecation time varies from 30 minutes to 12 hours.

In an alternative embodiment of the invention, calcium is added to the juice after pressing, allowing for a separate defecation step. However, due to maceration with the purified PME prior to pressing, the defecation occurs more quickly as compared to the original process using Rapidase® CPE.

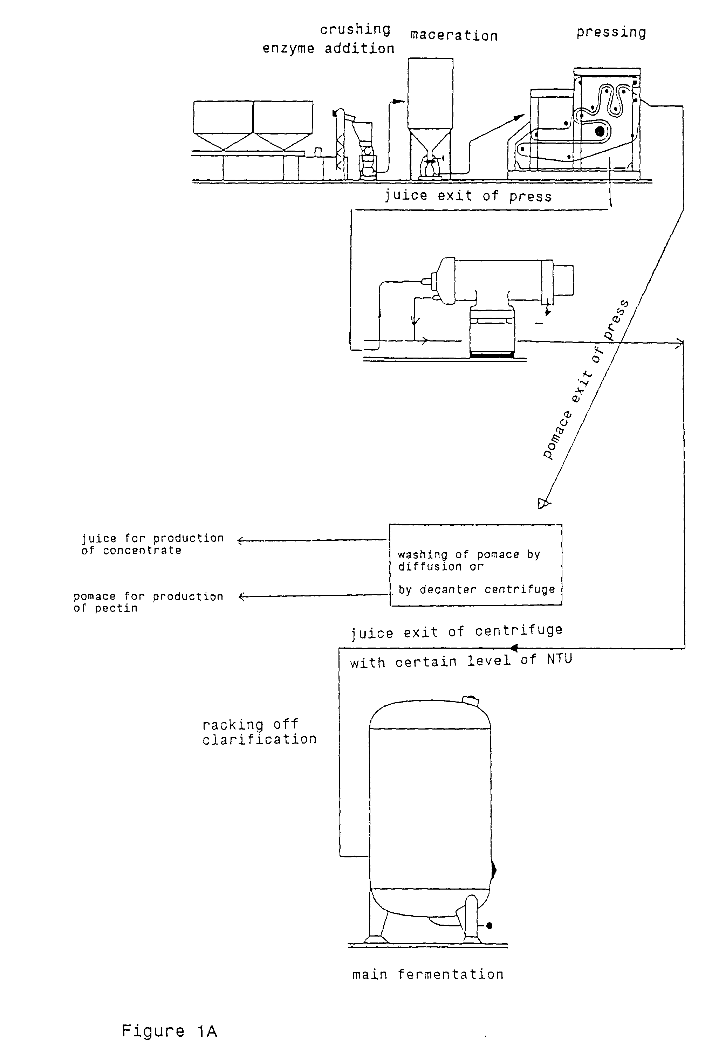

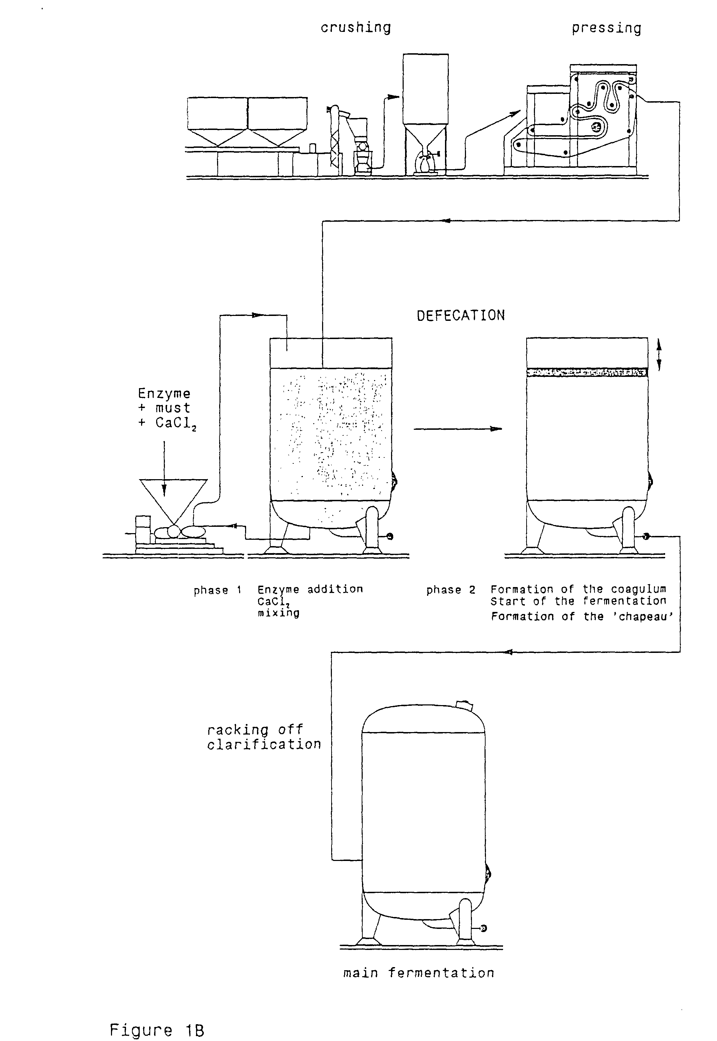

The pressing step can be performed with horizontal, belt presses and all other types of presses, whereupon the resulting juice is pumped directly to the centrifuge. Sediments are discarded to obtain the proper turbidity. Subsequently, the juice is pumped to the fermentation tank and fermented directly. In such a process, the need for a separate defecation tank is circumvented. The defecation process, which started during maceration, continues in the first stage of the main fermentation. In Figure 1A an outline is given of this new simplified process (with purified PME and without a separate defecation step). To enable a comparison with the current process using Rapidase® CPE in defecation, this process is depicted in Figure 1B.

Thus, the present invention provides a substantial simplification of the process in circumventing the need for a separate defecation step. Furthermore, the present invention describes a process with a considerably reduced process time. Both phenomena provide a drastic cost-reduction of the process, by decreasing the amount of tanks, by decreasing the cooling requirement and by a decreased immobilization of the tanks.

The pomace can be washed to release soluble sugars by a process of water diffusion or can be mixed with water and can then be sent to the decanter centrifuge. As the pomace is less viscous, the water diffusion is improved, the process time is decreased and pomace handling is easier.

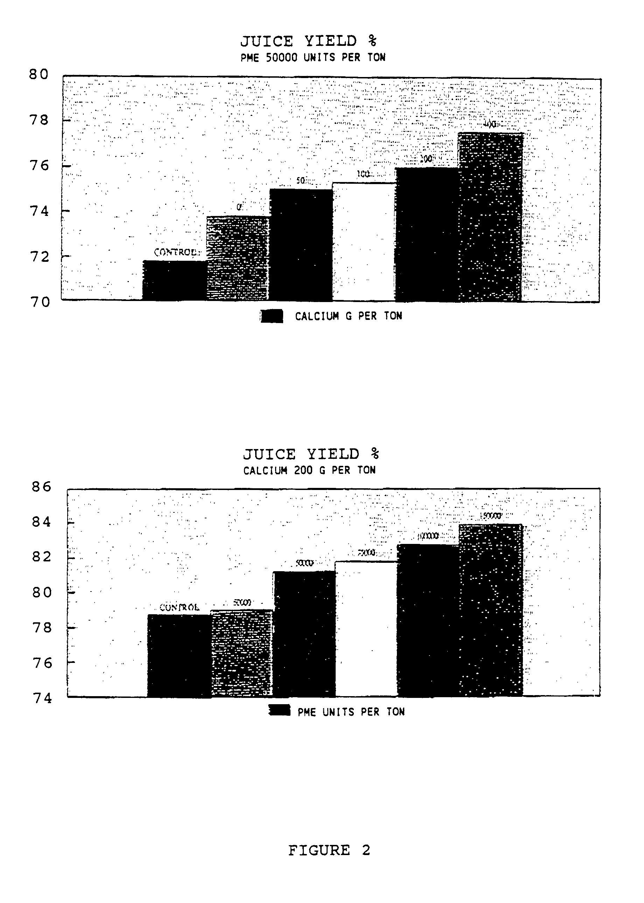

Additional advantages of the use of a substantially purified PME in the cider production process concern an improved juice yield and an improved juice, and consequently cider, and pomace quality. First of all, the pulp pressability and thus the juice yield are improved (see also Grassin, European patent EP 0547648). The treatment with the substantially purified PME increases the apple juice yield by +1 to +10% (see Figure 2). Also the volume of free run juice is larger. Consequently, a larger volume of cider is produced from a certain amount of apples. Furthermore, since the purified PME only acts upon solubilized pectin and does not demethylate the protopectin within the pomace, the treated juice, and thus the cider produced from such a juice, have an even lower methanol content than using the original process with Rapidase® CPE. In addition, the Calvados and eaux de vie produced with such cider also have a lower methanol content.

The pomace has a higher dry matter content, therefore it can be more easily dried. Additionally, the cider producer may sell the pomace containing non-demethylated protopectin to pectin manufacturers (Grassin, European patent EP 0547648).

Depending on the sanitary state of the apples, undesirable microorganisms may develop during juice production and fermentation, imparting unfavourable flavours and unwanted fermentation types. However, in the process of the present invention, as a consequence of its simplicity combined with a shorter process time, these microorganisms have a substantially decreased chance to develop. Therefore, a cider produced with the process provided by the present invention has a substantially decreased chance to possess off-flavours produced by contaminating microorganisms. Moreover, the present invention provides a juice with an improved sanitary state.

Following the inclusion of an enzymatic maceration step in the cider production process, comprising the use of a substantially purified pectin methylesterase, it can be concluded that the process for the production of cider becomes much more economic, because of substantial simplification of the process, a decrease in process time and a decrease in required tanks. Additionally, more cider can be produced from a certain amount of apples. Another important aspect is an improvement of the quality of the cider upon use of the new process.

### Experimental

### Assay of pectin esterase activity

One PE unit is defined as the amount of enzyme which hydrolizes one micro-equivalent carboxymethyl in one minute under reaction conditions at 30°C and pH=4.5. The substrate is Apple pectin Ruban Brun 0.5% with a methylation degree of over 70% in water.
One PE Unit = 0.98 PE International Unit.
Reaction conditions for the assay described here and below are standard for these assays. In general, they are solutions of the indicated substrate buffered to the desired pH.

### Assay of pectin lyase (PL) activity

One PL Unit is defined as the amount of enzyme producing one micromole of unsaturated 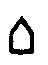 4,5 uronic product in one minute. The molar specific absorption of the product is 5.55 x 10³. The reaction is performed at 45°C, pH 5.5 and the substrate is surmethylated pectin (1% w/v). The optical density, measured at 235 nm, is read after a reaction time of 10 minutes.

### Assay of endo-Polygalacturonase (endo PG) activity

One endo PG Unit is defined as the amount of enzyme in 1 ml of enzymatic solution which decreases the substrate viscosity with a rate having an appearant rate constant of 0.0053 per minute under the reaction conditions at 45°C and pH=4.5. The substrate is sodium polygalacturonate 0.5%.

### Assay of exo-Polygalacturonase (exo PG) activity

One exo PG Unit is defined as the quantity of enzyme which catalyzes the hydrolysis of the β-1,4 bond in polygalacturonate forming one micromole of galacturonic acid in one minute at 30°C at pH 4.5 (Scaffer and Somogyi J. Biol. Chem. (1952) 195 p.19).

### Turbidity

The juice turbidity is measured by nephelometry and expressed in NTU (Nephelometric Turbidity Units).

### Example 1

### Decrease of the defecation/clarification time using the purified PME

Industrial trials have been performed using PME in maceration of cider apples varieties. These apples contain an average of about 6700 to 17500 mg galacturonic acid per kg apples. The size of the trials was 2 tons apples.
Two control trials have been performed: Control no. 1 according to the classical process without any enzyme and Control no. 2 using Rapidase® CPE at 10g/hl. Rapidase® CPE is a commercial pectin methylesterase which use is recommended at this dosage. However, this enzyme is much less purified compared to what we have described as "purified PME". The trials 3 and 4 concern the performance of two doses of this purified PME. The addition of CaCl₂ at 44 g/hl has been carried out simultaneously with the enzyme addition. The results of the trials are depicted in Table 1.

**Table 1**

| Use of PME in maceration of cider apples. | | | | | | | |
|---|---|---|---|---|---|---|---|
| TRIALS | APPLES | T °C | DOSAGE g/ton | PME U/ton | MACERATION minutes | DEFECATION hours | JUICE |
| No. 1 | overmature | 8 | 0 | 0 | 0 | 96 | turbid |
| No. 2 | overmature | 8 | 10 | 1000 | 30 | 72 | turbid |
| No. 3 | mature | 8 | 150 | 39000 | 30 | <24 | clear |
| No. 4 | mature | 8 | 300 | 78000 | 30 | <24 | clear |

The results show that the use of a purified PME allows to perform the defecation - clarification in 1 day instead of 3 or 4 days. The defecation speed is related to the PME activity involved in the trial. Furthermore, the improvements have been obtained at low temperature (below 10°C) showing that the purified PME is still active at this temperature.

## Claims

1. Process for the production of cider from apples comprising the steps of crushing the apples, pressing, defecation, centrifugation and fermentation,
**characterized in that** a maceration step is included before pressing, wherein a purified pectin methylecterase preparation is added to the crushed apples.

2. Process according to claim 1, further **characterized in that** the pectin methylesterase is present in a preparation which contains less than 1 unit of polygalacturonase and less than 1 unit of pectin lyase over 100 units of pectin methylesterase.

3. Process according to claims 1 or 2 wherein the pectin methylesterase is of fungal origin.

4. Process according to claims 1 or 2 wherein the pectin methylesterase is from Aspergillus.

5. Process according to any one of the claims 1 to 4, further **characterized in that** calcium ions are added together with the pectin methylesterase.

6. Process according to any one of the claims 1 to 4, further **characterized in that** calcium ions are added after the pressing step.

7. Process according to claim 1, **characterized in that** the defecation has a duration of less than 24 hours.

8. Process according to claim 1, **characterized in that** defecation occurs during maceration.

9. Process according to claim 1, **characterised in that** it does not comprise a separate defecation step after pressing.

## Patentansprüche

1. Verfahren zur Herstellung von Most aus Äpfeln mit den Schritten Quetschen der Äpfel, Pressen, Klären, Zentrifugieren und Gären, **dadurch gekennzeichnet**, dass vor dem Pressen eine Mazeration stattfindet, bei der ein gereinigtes Pektinmethylesterasepräparat zu den gequetschten Äpfeln gegeben wird.

2. Verfahren nach Anspruch 1, weiterhin **dadurch gekennzeichnet**, dass die Pektinmethylesterase in einem Präparat vorliegt, das weniger als 1 Einheit Polygalacturonase und weniger als 1 Einheit Pektinlyase pro 100 Einheiten Pektinmethylesterase enthält.

3. Verfahren nach Anspruch 1 oder 2, wobei die Pektinmethylesterase pilzlichen Ursprungs ist.

4. Verfahren nach Anspruch 1 oder 2, wobei die Pektinmethylesterase vom Aspergillus stammt.

5. Verfahren nach einem der Ansprüche 1 bis 4, weiterhin **dadurch gekennzeichnet**, dass gemeinsam mit der Pektinmethylesterase Kalziumionen zugegeben werden.

6. Verfahren nach einem der Ansprüche 1 bis 4, weiterhin **dadurch gekennzeichnet,** dass nach dem Pressen Kalziumionen zugegeben werden.

7. Verfahren nach Anspruch 1, d**adurch gekennzeichnet,** dass die Klärung weniger als 24 Stunden lang dauert.

8. Verfahren nach Anspruch 1, **dadurch gekennzeichnet,** dass die Klärung während der Mazeration durchgeführt wird.

9. Verfahren nach Anspruch 1, **dadurch gekennzeichnet,** dass nach dem Pressen keine separate Klärung durchgeführt wird.

## Revendications

1. Procédé pour la production de cidre à partir de pommes comprenant les étapes d'écrasement des pommes, pressage, défécation, centrifugation et fermentation, **caractérisé en ce qu**'une étape de macération est incluse avant le pressage, une préparation de pectine méthylestérase purifiée étant ajoutée aux pommes écrasées.

2. Procédé selon la revendication 1, caractérisé en outre en ce que la pectine méthylestérase est présente dans une préparation contenant moins d'une unité de polygalacturonase et moins d'une unité de pectine lyase pour 100 unités de pectine méthylestérase.

3. Procédé selon les revendications 1 ou 2, dans lequel la pectine méthylestérase est d'origine fongique.

4. Procédé selon les revendications 1 ou 2, dans lequel la pectine méthylestérase provient d'*Aspergillus*.

5. Procédé selon une quelconque des revendications 1 à 4, caractérisé en outre en ce que des ions calcium sont ajoutés en même temps que la pectine méthylestérase.

6. Procédé selon une quelconque des revendications 1 à 4, caractérisé en outre en ce que des ions calcium sont ajoutés après l'étape du pressage.

7. Procédé selon la revendication 1, **caractérisé en ce que** la défécation a une durée inférieure à 24 heures.

8. Procédé selon la revendication 1, **caractérisé en ce que** la défécation se produit pendant la macération.

9. Procédé selon la revendication 1, **caractérisé en ce qu**'il ne comprend pas d'étape de défécation séparée après le pressage.
